# EUROPÄISCHE PATENTSCHRIFT

(11) **EP 0 424 862 B1**
(45) Veröffentlichungstag und Bekanntmachung des Hinweises auf die Patenterteilung: **21.06.1995**
(21) Anmeldenummer: 90120272.1
(22) Anmeldetag: 23.10.1990
(51) Int. Cl.: G05B 9/03, G05B 7/02

(54) **Analoger Mehrkanalregler**
Analog multi-channel controller
Régulateur analogique multicanal

(30) Priorität: 27.10.1989 DE 3935958
(43) Veröffentlichungstag der Anmeldung: 02.05.1991
(73) Patentinhaber: MTU MOTOREN- UND TURBINEN-UNION MÜNCHEN GMBH, D-80976 München (DE)
(72) Erfinder: Scherer, Wolfgang, W-8060 Dachau (DE)

(56) Entgegenhaltungen:
- EP-A- 0 041 701
- EP-A- 0 318 006
- US-A- 4 587 470

## Beschreibung

Die Erfindung betrifft einen digitalen oder analogen Mehrkanalregler mit zumindest zwei redundanten Kanälen, mit je einem Integrator, wobei für jeden Kanal getrennt das gleiche Regelabweichungssignal auf den jeweiligen Integrator aufschaltbar ist. Ein solcher Mehrkanalregler ist aus der EP 0318006 A2 bekannt.

Bei mehrkanaligen Reglern werden mehrere Eingangskanäle der gleichen oder separaten Regelstrecken zugeführt, wobei der oder die Ausgänge der Regelkanäle zusammengefaßt ein Stellsignal bilden. Die Eingangssignale der Regler sind Abweichungssignale, d. h. solche, die aus einer Differenzbildung aus einem Sollwert und einem Istwert gebildet worden sind. Wesentlich dabei ist, daß sich stets nur ein Kanal im Eingriff befindet, d. h., daß nur dessen Abweichungssignal über den Regler zum Stellsignal weiterverarbeitet wird. Die anderen Kanäle sind zwar elektrisch versorgt, ihre Stellsignale sind jedoch von einer Kanalumschaltlogik abgeschaltet.

Eine besondere Ausführungsform eines derartigen mehrkanaligen analogen Reglers ist ein redundanter Regler, bei dem vorzugsweise zwei, aber auch mehrere Reglerkanäle vorgesehen sind, die im wesentlichen das gleiche Signal aufweisen sollten. Derartige Regler sind erforderlich, wo der Ausfall eines Reglers untragbare Konsequenzen mit sich führen würde, und somit bei Defekt des einen Kanals auf den zweiten Kanal umgeschaltet werden kann.

Bei vorbekannten Reglern mit Integralanteil, d. h. PI-Regler, oder PID-Regler, sind die Integratoren des nicht im Eingriff befindlichen Kanales in die positive oder negative Sättigung gelaufen, da in der Praxis eine völlige Übereinstimmung der Eingangskanäle nicht gewährleistet ist. Da der nicht im Eingriff befindliche Integrator dort nicht auf den Wert des aktiven Integrators nachgeführt ist, sondern auf Gesamtpegel, ist eine ruckfreie Umschaltung nicht möglich, wird also in einem derartigen Fall auf den anderen Kanal umgeschaltet, so tritt im allgemeinen durch den Signalsprung auf den Sättigungswert des neu hinzugeschaltenen Integrators ein Störimpuls im Regelsystem auf.

Aufgabe der vorliegenden Erfindung ist es, einen gattungsgemäßen analogen Mehrkanalregler derart auszubilden, daß derartige Störimpulse im Regelsystem vermieden werden, d. h. eine ruckfreie Umschaltung möglich ist.

Erfindungsgemäß wird diese Aufgabe durch einen Regler mit den Merkmalen des Patentanspruchs 1 gelöst.

Der wesentliche Vorteil des erfindungsgemäßen Reglers besteht darin, daß der nicht im Eingriff befindliche Integrator nicht in die Sättigung läuft, sondern mit dem im Eingriff befindlichen Integratorausgang mitgeführt wird, so daß bei der Umschaltung von einem zum anderen Integrator kein Signalimpuls auftritt. Hierdurch wird vorteilhafterweise eine Störung im Regelsystem bei der Umschaltung vermieden.

Dem nicht im Eingriff befindlichen Integrator ist ein Summierer zugeordnet, wobei der Ausgang des Summierers den Eingang des Integrators beaufschlagt. Dem Pluseingang des Summierers wird das Integratorausgangssignal des im Eingriff befindlichen Integrators aufgeschaltet, während der Ausgang des zugeordneten Integrators dem Minuseingang zugeführt wird. Somit bildet der Integrator ein Verzögerungsglied erster Ordnung (PT₁-Glied) für das Ausgangssignal des im Eingriff befindlichen Integrators. Dies hat zur Folge, daß der Ausgang des nicht im Eingriff befindlichen Integrators demjenigen des anderen Integrators mit der durch die Integrationszeitkonstanten bestimmten Verzögerung folgt, und somit stationär dem im Eingriff befindlichen Integrator entspricht.

Ein weiterer wesentlicher Vorteil dieses Verzögerungsverhaltens besteht darin, daß bei Versagen des im Eingriff befindlichen Integrators, und einer hieraus notwendig gewordenen Umschaltung ein verbessertes Verhalten im Regelsystem möglich ist. Denn wenn davon ausgegangen wird, daß der defekt gewordene Kanal durch seinen Defekt eine unvorhergesehene Signaländerung am Ausgang produziert, die nicht durch den tatsächlichen Eingangszustand gerechtfertigt ist, so wird diese Signalveränderung wegen des PT₁-Verhaltens nur mit Verzögerung von dem außer Eingriff befindlichen Integrator nachvollzogen.

Erfolgt die Umschaltung sehr bald nach dem aufgetretenen Defekt, so entspricht das Ausgangssignal des nunmehr zugeschalteten Integrators mehr dem tatsächlich erforderlichen Stellsignal. Dies hat zwar zur Folge, daß ein Spannungssprung im Regelsystem auftritt, aber dieser Nachteil wird durch die oben geschilderten vorteilhaften Wirkungen überkompensiert. Ferner wird der Spannungssprung durch die Optimierung der Zeitkonstante es PT₁-Gliedes auf ein Minimum reduziert. Dies ist ein wesentlicher Vorteil des PT₁-Gliedes, daß nicht auf den "Defekt-Zustand" des anderen, defekten Kanales initialisiert wird.

Die Umschaltung von dem einen auf den anderen Kanal erfogt dadurch, daß gleichzeitig die Umschalter der beiden Integratoren umgelegt werden, so daß der Eingang des bisher im Eingriff befindlichen Integrators vom Signalabweichungs-Eingangssignal auf den Ausgang des zugeordneten Summierers umgeschaltet wird, so daß die hierdurch gebildete Schleife zu einem Verzögerungsglied erster Ordnung für die am Pluseingang dieses Summierers stehenden Signales wird. Gleichzeitig wird der Eingang des bisher außer Eingriff befindlichen Integrators vom Ausgang des zugeordneten Summierers abgeschaltet und auf den zugeordneten Eingangskanal mit dessen Abweichungssignal aufgeschaltet. Dadurch übernimmt dieser Integrator die weitere Regelung.

In bevorzugter Weiterbildung der Erfindung sind zwischen den Ausgängen der Integratoren und den Eingängen der nicht zugeordneten Summierer Trennverstärker zur galvanischen Trennung vorgesehen. Alternativ können Differenzverstärker zur hochohmigen Entkopplung vorgesehen werden. Hierdurch wird eine vollständige galvanische Entkopplung der einzelnen Kanäle voneinander gewährleistet, so daß ein Bauteildefekt in einem Kanal keine Auswirkungen auf den oder die anderen Kanäle unbedingt haben kann.

Die Erfindung wird nachfolgend anhand der beigefügten Zeichnung weiter erläutert.

Dabei zeigt:
- Fig. 1:: einen Ausschnitt eines Zweikanalreglers, wie er Stand der Technik ist,
- Fig. 2:: ein schematisches Schaltbild eines Dreikanalreglers entsprechend der Erfindung
- Fig. 3:: eine Ausführung mit Trennverstärkern.

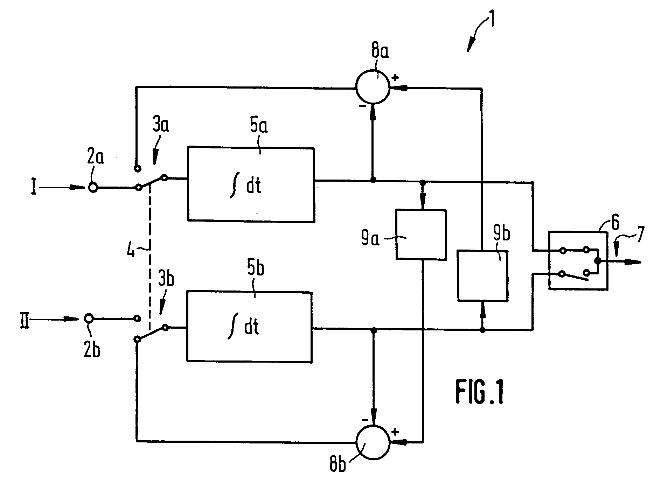

Der in Fig. 1 dargestellte analoge Zweikanalregler 1 weist zwei Eingänge 2a, b auf, die von Regelabweichungssignalen der beiden Kanäle I und II beaufschlagt werden. Diese Regelabweichungssignale werden üblicherweise durch Differenzbildung eines Sollwertes mit dem zugehörigen Istwert gebildet. Die beiden Eingänge 2a, b sind mit zwei Umschaltern 3a, 3b verbunden, die gemeinsam umgeschaltet werden, was durch die gestrichelte Linie 4 angedeutet wird. Die Umschalter 3a, b können als mechanische oder elektronische Schalter ausgebildet sein, wobei letztere vorzuziehen sind, da die Schaltgeschwindigkeit höher und die Ausfallwahrscheinlichkeit niedriger ist.

Die beiden Umschalter 3a, b sind mit zwei Regelverstärker 5a, 5b verbunden, die integrales Verhalten aufweisen, insbesondere solche mit I, PI, PID-Verhalten. Die Ausgänge dieser im folgenden als Integratoren bezeichneten Regelverstärker 5a, b werden in einer Zusammenführungseinheit 6 zu einem Stellsignal 7 zusammengefaßt. Diese Zusammenführungseinheit 6 ist dabei als Umschalter zur alternativen Durchschaltung eines der beiden Integrierer 5a, b ausgeführt.

Gleichzeitig sind die Ausgänge der Integratoren 5a, b mit Minuseingängen zweier jeweils zugeordneter Summierer 8a, b und parallel dazu mit den Eingängen zweier Trennverstärker 9a, b verbunden. Die Ausgänge der Trennverstärker 9b, a des jeweils anderen Integrators 5b, a wird dem Pluseingang des Summierers 8a, b zugeführt. Die Ausgänge der Summierer 8a, b sind mit den jeweils zweiten Schalteingängen der Umschalter 3a, b verbunden.

In der Fig. 1 gezeigten Stellung befindet sich Kanal I im Eingriff, d. h., das am Eingang 2a befindliche Regelabweichungssignal wird über den Integrator 5a und die Zusammenführungseinheit 6 als Stellsignal 7 durchgeschaltet. Gleichzeitig befindet sich der Umschalter 3b in einer Stellung, bei der der zugehörige Eingang 2b vom Integrator 5b abgekoppelt ist. Der Eingang dieses Integrators 5b ist mit dem Ausgang des zugeordneten Summierers 8b verbunden. In dieser Stellung bildet die zwischen dem Integrierer 5b und dem zugeordneten Summierer 8b gebildete Schleife ein Verzögerungsglied erster Ordnung (PT₁) für das im Pluseingang des Summierers 8b zugeführte Signal.

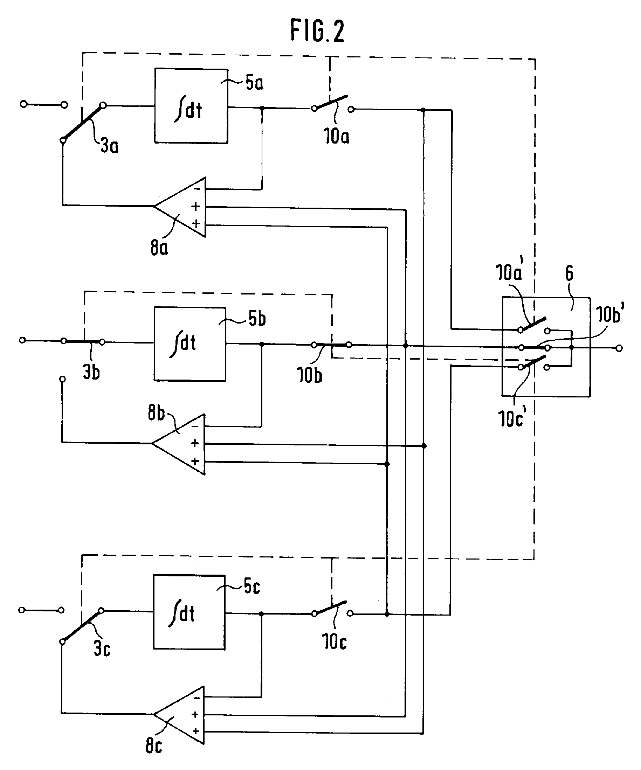

Bei der erfindungsgemäßen Regeleinrichtung mit drei Kanälen gemäß Fig. 2 ist ein Eingang 2c für den Kanal III vorgesehen. Auf gleiche Weise könnten beliebig viele weitere Kanäle zusammengeschaltet sein. Der Eingang 2c ist über einen Umschalter 3c mit dem Integrator 5c verbunden, dessen Ausgang wiederum u. a. einen zugeordneten Summierer 8c beaufschlagt. Dieser Summierer 8c weist mehrere Pluseingänge und einen Minuseingang auf. Der Minuseingang ist mit dem Ausgang des zugehörigen Integrators 5c verbunden, während die Pluseingänge mit den Ausgängen der anderen Integratoren 5a, b über die Schalter 10a, b verbunden sind. Dabei ist der mit dem derzeit im Eingriff befindlichen Integrator gekoppelte Schalter 10a geschlossen, während der Schalter 10b eines weiteren nicht im Eingriff befindlichen Integrators offen ist, so daß dessen Signal nicht dem Summierer 8c aufgeschaltet wird. Der Ausgang des dargestellten Integrators 5c umfaßt einen Schalter 10c, um dessen Ausgangssignal auf die zugeordneten Summierer 8a, b der anderen Kanäle aufzuschalten,wenn der Integrator 5c im Eingriff steht. Die Schalter 3c und 10c werden vorzugsweise gemeinsam angesteuert. Das Ausgangssignal wird hinter dem Schalter 10c außerdem der Zusammenführungseinheit 6 zugeleitet, wobei dadurch, daß stets nur einer der Schalter 10a, b, c durchgeschaltet ist, nur ein Signal an der Zusammenführungseinheit 6 anliegt.

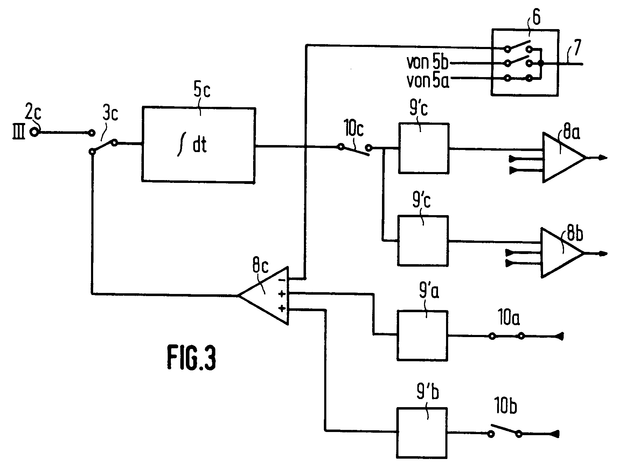

In Fig. 3 ist eine Ausführung eines Kanals dargestellt, der sich gegenüber der Ausführung gemäß Fig. 2 dadurch unterscheidet, daß Trennverstärker 9a′, 9b′ und 9c′ in den Signalfluß eingeschaltet sind. Und zwar sind die beiden Trennverstärker 9c′ zwischen den Schalter 10c und die Eingänge der Summierer 8a und 8b der anderen Kanäle geschaltet. Der Trennverstärker 9a′ ist eigentlich dem Kanal I zuzuordnen (der in allen Figuren als im Eingriff befindlich dargestellt ist), und koppelt analog das Ausgangssignal des Integrators 5a (Fig. 1) über den geschlossenen Schalter 10a auf einen Plus-Eingang des Summierers 8c. Genauso verhält es sich mit dem Trennverstärker 9′b.

## Patentansprüche

1. Regeleinrichtung mit zumindest drei Kanälen mit je einem Integrator, wobei für jeden Kanal getrennt das gleiche Regelabweichungssignal auf denjeweiligen Integrator aufschaltbar ist, wobei nur jeweils ein Kanal (I, II, III, ...) durch eine Zusammenführungseinheit (6) wahlweise in Eingriff ist, wobei der Integrator (5a, 5b, 5c, ...) jedes Kanals einem Umschalter (3a, 3b, 4c, ...) nachgeordnet und mit einem Minuseingang eines diesem Kanal zugeordneten Summierers (8a, 8b, 8c, ...) verbunden ist, wobei der Umschalter (3a, 3b, 3c, ...) entweder, wenn der betreffende Kanal im Eingriff ist, das zugehörige Regelabweichungssignal oder, wenn der betreffende Kanal nicht im Eingriff ist, den Ausgang des zugeordneten Summierers (8a, 8b, 8c,...) dem jeweiligen Integrator (5a,, 5b, 5c, ...) über jeweils einen Schalter (10a, 10b, 10c, ...) mit jeweils einem Pluseingang jedes nicht zugeordneten Summierers (8a, 8b, 8c, ...) verbunden ist, wobei nur der zugehörige Schalter (10a, bzw. 10b bzw. 10c) des jeweils im Eingriff befindlichen Integrators (5a bzw. 5b bzw. 5c) durchgeschaltet ist.

2. Regeleinrichtung nach Anspruch 1, dadurch gekennzeichnet, daß jeweils zwischen den Ausgängen der Integratoren (5a, 5b, 5c, ...) und den Eingängen der nicht zugeordneten Summierer (8b, 8c, ..., 8a) Trennverstärker (9a, 9b, ...; 9′a, 9′b, 9′c, ...) zur galvanischen Trennung vorgesehen sind.

3. Regeleinrichtung nach Anspruch 1, dadurch gekennzeichnet, daß jeweils zwischen den Ausgängen der Integratoren (5a, 5b, 5c, ...) und den Eingängen der nicht zugeordneten Summierer (8b, 8c, ..., 8a) Verstärker zur hochohmigen Entkopplung vorgesehen sind.

## Claims

1. Control device having at least three channels, each channel having an integrator, wherein, for each channel, the same control deviation signal can be applied separately to the applicable integrator, wherein, in each case, only one channel (I, II, III, ...) is optionally engaged by means of a junction device (6), wherein the integrator (5a, 5b, 5c, ...) of each channel is arranged downstream of a change-over switch (3a, 3b, 3c, ...) and connected to a negative input of an adder (8a, 8b, 8c, ...) assigned to this channel, wherein the change-over switch (3a, 3b, 3c, ...) connects either the associated control deviation signal, if the affected channel is engaged, or the output of the allocated adder (8a, 8b, 8c, ...), if the affected channel is not engaged, to the applicable integrator (5a, 5b, 5c, ...), in each case via a switch (10a, 10b, 10c, ...), each switch having a positive input for each unassigned adder (8a, 8b, 8c, ...), wherein only the associated switch (10a or 10b or 10c) of the integrator (5a or 5b or 5c) which is engaged is connected through.

2. Control device according to claim 1, characterised in that buffer amplifiers (9a, 9b, ...; 9′a, 9′b, 9′c, ...) for electrical isolation are provided in each case between the outputs of the integrators (5a, 5b, 5c, ...) and the inputs of the unassigned adders (8b, 8c, ..., 8a).

3. Control device according to claim 1, characterised in that amplifiers for high-resistance isolation are provided in each case between the outputs of the integrators (5a, 5b, 5c, ...) and the inputs of the unassigned adders (8b, 8c, ..., 8a).

## Revendications

1. Régulateur à au moins trois canaux équipés chacun d'un intégrateur, chaque canal pouvant appliquer séparément le même signal de déviation de régulation à l'intégrateur respectif, et chaque fois un canal (I, II, III, ...) est sélectivement en prise sur l'unité de combinaison (6), l'intégrateur (5a, 5b, 5c, ...) de chaque canal en aval d'un inverseur (3a, 3b, 3c,...) est relié à une entrée négative d'un additionneur (8a, 8b, 8c,...) associé à ce canal, l'inverseur (3a, 3b, 3c,...) appliquant, lorsque le canal concerné est en prise, le signal de déviation de régulation correspondant ou lorsque le canal concerné est hors prise, le signal de sortie de l'additionneur correspondant (8a, 8b, 8c,...), à l'intégrateur respectif (5a, 5b, 5c,...) par l'intermédiaire d'un interrupteur (10a, 10b, 10c) respectif, avec chaque fois une entrée positive de chacun des additionneurs non associés (8a, 8b, 8c,...), seul l'interrupteur correspondant (10a ou 10b ou 10c) de l'intégrateur respectif en prise (5a ou 5b ou 5c) étant fermé.

2. Régulateur selon la revendication 1, caractérisé en ce qu'entre chacune des sorties des intégrateurs (5a, 5b, 5c,...) et les entrées des additionneurs non associés (8b, 8c,..., 8a), des amplificateurs séparateurs (9a, 9b,... ; 9′a, 9′b, 9′c,...) assurent la séparation galvanique.

3. Régulateur selon la revendication 1, caractérisé en ce qu'entre chacune des sorties des intégrateurs (5a, 5b, 5c,...) et les entrées des additionneurs non associés (8b, 8c,..., 8a) des amplificateurs assurent un découplage fortement ohmique.
